(19) **Europäisches Patentamt**
**European Patent Office**
**Office européen des brevets**

(11) **EP 1 973 333 A1**

(12) **EUROPEAN PATENT APPLICATION**

(43) Date of publication:
**24.09.2008 Bulletin 2008/39**

(51) Int Cl.:
***H04N 1/56*** (2006.01)

(21) Application number: **08003406.9**

(22) Date of filing: **25.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **22.03.2007 JP 2007074775**

(71) Applicant: **Murata Machinery, Ltd.**
**Minami-ku**
**Kyoto-shi**
**Kyoto 601-8326 (JP)**

(72) Inventor: **Dokuni, Kenji**
**Kyoto 612-8686 (JP)**

(74) Representative: **Zimmermann, Tankred Klaus et al**
**Schoppe, Zimmermann, Stöckeler & Zinkler**
**Patentanwälte**
**Postfach 246**
**82043 Pullach bei München (DE)**

(54) **Image processing apparatus**

(57)    An aspect of the invention provides an image processing apparatus having a color copy function of reducing a color of a document image to print the document image on a recording medium. The image processing apparatus includes an image generation unit arranged to scan a document to generate image data; a hue determination unit arranged to determine a specific hue included in the image data and a hue becoming a complementary color of the specific hue; a color reduction unit arranged to reduce a color of the image data based on the specific hue and the hue becoming the complementary color of the specific hue; and an output unit arranged to output the image data whose color is reduced by the color reduction unit on a recording medium. The color reduction unit replaces the image data which is of a hue in a predetermined range from the hue becoming the complementary color with the hue becoming the complementary color, and the color reduction unit replaces the image data which is of a hue except for the hue in the predetermined range with the specific hue.

FIG. 2

**Description**

CROSS-REFERENCE TO RELATED APPLICATIONS

This application claims priority to Japanese Patent Application No. 2007-074775, filed on March 22, 2007, which application is hereby incorporated by reference in its entirety.

BACKGROUND OF THE INVENTION

1. Field of the Invention

The present invention relates to an image processing apparatus, particularly to an image processing apparatus which outputs a document image while reducing a color of the document image.

2. Description of the Related Art

Conventionally, for example, Japanese Patent Publication Laid-Open No. 2004-7370 discloses an image processing apparatus having a function of reducing the color of the document. The image processing apparatus disclosed in Japanese Patent Publication Laid-Open No. 2004-7370 is a personal computer, in which the color of the document scanned with a scanner is reduced and the color-reduced document image can be printed on recording paper with a printer. In the image processing apparatus, a hue to be retained is specified by clicking the document image displayed on a monitor, and pixels except for the specified color are converted into a monochrome color to achieve the color reduction. In the image processing apparatus, the hue included in a predetermined range is retained from the specified hue, and the hue out of the range can also be converted into a monochrome color.

BRIEF SUMMARY OF THE INVENTION

However, conventionally, only the specified hue or the hue included in a predetermined range from the specified hue is retained like the image processing apparatus disclosed in Japanese Patent Publication Laid-Open No. 2004-7370. Therefore, in the case where color reduction is performed to the document image having a broad hue distribution, unfortunately color-reduced image has low hue contrast.
In view of the foregoing, the present invention provides an image processing apparatus which can obtain a color-reduced image having high hue contrast.
In order to overcome the problems described above, a preferred embodiment of the present invention provides an image processing apparatus having a function of outputting a document image while reducing a color of the document image, and including an image generation unit arranged to scan a document to generate image data; a hue determination unit arranged to determine a specific hue included in the image data and a hue becoming a complementary color of the specific hue; a color reduction unit arranged to retain the specific hue and the hue becoming the complementary color to reduce a color of the image data; and an output unit arranged to output the image data whose color is reduced by the color reduction unit.
Therefore, in the image processing apparatus having the function of reducing the color of the document image to output the document image, the image generation unit scans the document to generate the image data. Then, the hue determination unit determines the specific hue included in the image data and the hue becoming the complementary color of the specific hue, a color reduction unit retains the specific hue and the hue becoming the complementary color to then reduce a color of the image data. An output unit outputs the image data whose color is reduced by the color reduction unit. The output unit, for example, prints the color-reduction image data on the recording paper or outputs the color-reduction image data as a file. Thus, the specific hue and the hue becoming the complementary color of the specific hue are retained before color reduction of the image data, so that the color-reduced image having the high hue contrast can be obtained.
In the image processing apparatus according to the present invention, preferably the color reduction unit replaces the image data which is of a hue in a predetermined range from the hue becoming the complementary color with the hue becoming the complementary color, and the color reduction unit replaces the image data which is of a hue except for the hue in the predetermined range with the specific hue. Accordingly, the color-reduction image, in which the pixels which are of the hue in the predetermined range from the hue becoming the complementary color are set to the hue becoming the complementary color while the pixels which are of the hue except for the hue in the predetermined range are set to the specific hue, can be obtained.
In the image processing apparatus according to the present invention, preferably the color reduction unit replaces the image data which is of a hue in a predetermined first range from the specific hue with the specific hue, the color reduction unit replaces the image data which is of a hue in a predetermined second range from the hue becoming the complementary color with the hue becoming the complementary color, and chroma saturation of image data which is of a hue except for hues in the predetermined first range and the predetermined second range is set to be zero.

Therefore, the color reduction unit replaces the image data which is of the hue in the predetermined first range from the specific hue with the specific hue, the color reduction unit replaces the image data which is of the hue in the predetermined second range from the hue becoming the complementary color with the hue becoming the complementary color, and the chroma saturation of image data which is of a hue except for hues in the predetermined first range and the predetermined second range is set to be zero. Accordingly, the color-reduction image, in which the pixels which are of the hue in the predetermined first range from the specific hue is set to be the specific hue, the pixels which are of the hue in the predetermined second range from the hue becoming the complementary color are set to be the hue becoming the complementary color, and the chroma saturation of the pixels which are of the hue except for the hues in the first and second ranges is set to be zero, can be obtained. According to the color reduction method, the portion having the hue is decreased compared with the monochrome portion, so that the portion having the hue which is of the point of the document can be emphasized and consumption of a color material such as toner can be reduced.

In the image processing apparatus according to the present invention, preferably the hue determination unit sets a hue having the highest chroma saturation in hues included in the image data to the specific hue.

Therefore, the hue determination unit sets the hue having the highest chroma saturation in the hues included in the image data to the specific hue. Accordingly, the color-reduction image in which the hue having the highest chroma saturation and the hue becoming the complementary color are retained can be obtained. Because the portion which becomes the point in the document image is frequently recorded in bright color, the color of the important portion in the document can be left by retaining the hue having the highest chroma saturation and the hue becoming the complementary color. The color reduction processing is suitable to the document having few colors and a relatively small area of the colored portion compared to the whole of document area.

In the another image processing apparatus according to the present invention, preferably the color reduction unit retains before color reduction of the image data the specific hue and the hue becoming the complementary color when chroma saturation of the hue becoming the complementary color is not lower than a predetermined threshold value, and the color reduction unit retains before color-reduction the specific hue when the chroma saturation of the hue becoming the complementary color is lower than the predetermined threshold value.

Therefore, the color reduction unit retains before color reduction of the image data the specific hue and the hue becoming the complementary color when the chroma saturation of the hue becoming the complementary color is not lower than the predetermined threshold value, and the color reduction unit retains before color-reduction the specific hue when the chroma saturation of the hue becoming the complementary color is lower than the predetermined threshold value. As described above, the hue becoming complementary color is retained only in the case where the effect for maintaining the high hue contrast can be obtained by retaining the hue becoming the complementary color when the chroma saturation of the hue becoming the complementary color is not lower than the predetermined threshold value. When the chroma saturation of the hue becoming the complementary color is lower than the predetermined threshold value, the high hue contrast cannot be maintained. In such case, because the hue becoming the complementary color is not retained, the toner can be saved.

In the another image processing apparatus according to the present invention, preferably the color reduction unit retains before color reduction of the image data the specific hue and the hue becoming the complementary color when a proportion of chroma saturation of the hue becoming the complementary color to chroma saturation of the specific hue is not lower than a predetermined value, and the color reduction unit retains before color reduction the specific hue when the proportion is lower than the predetermined value.

Therefore, the color reduction unit retains before color reduction of the image data the specific hue and the hue becoming the complementary color when the proportion of chroma saturation of the hue becoming the complementary color to chroma saturation of the specific hue is not lower than the predetermined value, and the color reduction unit retains before color reduction the specific hue when the proportion is lower than the predetermined value. When the proportion of chroma saturation of the hue becoming the complementary color to chroma saturation of the specific hue is not lower than the predetermined value, the effect for maintaining the high hue contrast can be obtained. Only in such cases, the hue becoming complementary color is retained. When the proportion of chroma saturation of the hue becoming the complementary color to chroma saturation of the specific hue is lower than the predetermined value, the high hue contrast cannot be maintained. In such case, because the hue becoming the complementary color is not retained, the toner can be saved.

In the another image processing apparatus according to the present invention, preferably the hue determination unit sets a hue having the highest appearance frequency in hues included in the image data to be the specific hue.

Therefore, the hue determination unit sets the hue having the highest appearance frequency in the hues included in the image data to be the specific hue. Accordingly the color-reduction image in which the hue having the highest appearance frequency and the hue becoming the complementary color are retained can be obtained. In the case of the document in which many colors are provided, an area of the colored portion to the whole of document area is relatively large, and the whole impression is determined by a color having a large proportion to the colored portion, the color reduction can be performed without losing quality of the whole image a lot by retaining the hue having the highest appearance frequency and the hue becoming the complementary color.

In the another image processing apparatus according to the present invention, preferably the color reduction unit retains before color reduction of the image data the specific hue and the hue becoming the complementary color when appearance frequency of the hue becoming the complementary color is not lower than a predetermined threshold value, and the color reduction unit retains before color reduction the specific hue when the appearance frequency of the hue becoming the complementary color is lower than the predetermined threshold value.

Therefore, the color reduction unit retains before color reduction of the image data the specific hue and the hue becoming the complementary color when the appearance frequency of the hue becoming the complementary color is not lower than the predetermined threshold value, and the color reduction unit retains before color reduction the specific hue when the appearance frequency of the hue becoming the complementary color is lower than the predetermined threshold value. When the appearance frequency in the image data of the hue becoming the complementary color is not lower than the predetermined threshold value, the effect for maintaining the high hue contrast can be obtained. Only in such cases, the hue becoming complementary color is retained. When the appearance frequency in the image data of the hue becoming the complementary color is lower than the predetermined threshold value, the high hue contrast cannot be maintained. In such case, because the hue becoming the complementary color is not retained, the toner can be saved.

In the another image processing apparatus according to the present invention, preferably the color reduction unit retains before color reduction of the image data the specific hue and the hue becoming the complementary color when a proportion of appearance frequency of the hue becoming the complementary color to appearance frequency of the specific hue is not lower than a predetermined value, and the color reduction unit retains before color reduction the specific hue when the proportion is lower than the predetermined value.

Therefore, the color reduction unit retains before color reduction of the image data the specific hue and the hue becoming the complementary color when the proportion of the appearance frequency in the image data of the hue becoming the complementary color to the appearance frequency in the image data of the specific hue is not lower than the predetermined value, and the color reduction unit retains before color reduction the specific hue when the proportion is lower than the predetermined value. When the proportion of the appearance frequency of the hue becoming the complementary color to the appearance frequency of the specific hue is not lower than the predetermined value, the effect for maintaining the high hue contrast can be obtained. Only in such cases, the hue becoming complementary color is retained. When the proportion of the appearance frequency of the hue becoming the complementary color to the appearance frequency of the specific hue is lower than the predetermined value, the high hue contrast cannot be maintained. In such case, because the hue becoming the complementary color is not retained, the toner can be saved.

Preferably the another image processing apparatus according to the present invention further includes an input accepting unit arranged to accept an input operation from the outside, wherein the hue determination unit determines the specific hue based on the input operation accepted by the input accepting unit, and the hue determination unit determines the hue becoming the complementary color based on the determined specific hue.

Therefore, the image processing apparatus further includes the input accepting unit arranged to accept the input operation from the outside, the hue determination unit determines the specific hue based on the input operation accepted by the input accepting unit, and the hue determination unit determines the hue becoming the complementary color based on the determined specific hue. Accordingly, the input accepting unit accepts the input operation performed by the user to set hue desired by the user to be the specific hue, thereby obtaining a color-reduced image in which the hue desired by the user is set to the specific hue, and the specific hue and the hue becoming the complementary color determined based on the specific hue are retained.

Other features, elements, processes, steps, characteristics and advantages of the present invention will become more apparent from the following detailed description of preferred embodiments of the present invention with reference to the attached drawings.

BRIEF DESCRIPTION OF THE DRAWINGS

Fig. 1 is a block diagram illustrating a configuration example of an internet facsimile apparatus according to the invention.

Fig. 2 is a block diagram illustrating a configuration example of an image processing unit.

Fig. 3 is an explanatory view illustrating a Cartesian coordinate of a YCbCr colorimetric system (color-difference system).

Fig. 4 is an explanatory view illustrating a polar coordinate of a hue-chroma saturation system.

Fig. 5 is an explanatory view explaining a specific hue determination method based on chroma saturation.

Fig. 6 is an explanatory view explaining a color reduction method based on specific hue and complementary color hue.

Fig. 7 is an explanatory view explaining a color reduction method based on specific hue and complementary color hue.

Fig. 8 is an explanatory view explaining a specific hue determination method based on a hue appearance frequency.

Fig. 9 is an explanatory view illustrating an example of a three-dimensional lookup table.

Fig. 10 is an explanatory view illustrating divided lattice points of the three-dimensional lookup table.

DETAILED DESCRIPTION OF PREFERRED EMBODIMENTS

An internet facsimile apparatus 1 which is of an example of an image processing apparatus according to the invention will be described below with reference to the drawings. The internet facsimile apparatus 1 is a so-called multi function peripheral including a facsimile function, an internet facsimile function, an electronic mail function, a scanning function, a copy function, a print function, and a telephone function. The internet facsimile apparatus 1 is installed in the office and connected to a public switched telephone network (PSTN) and a local area network (LAN).

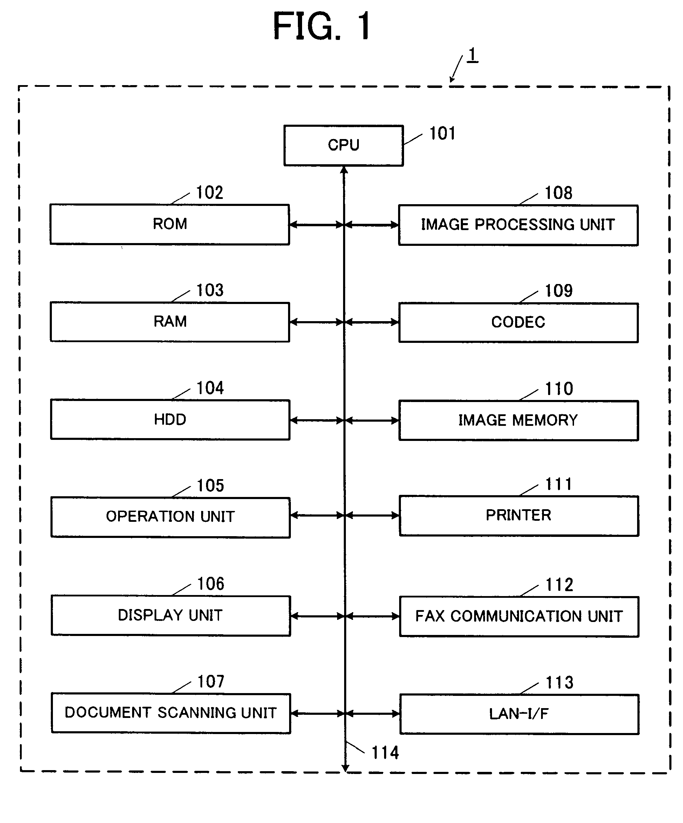

Fig. 1 is a block diagram illustrating a configuration example of the internet facsimile apparatus 1. Referring to Fig. 1, the internet facsimile apparatus 1 includes a central processing unit (CPU) 101, a read only memory (RAM) 102, a random access memory (RAM) 103, a hard disk drive (HDD) 104, a operation unit 105, a display unit 106, a document scanning unit 107, an image processing unit 108, a Coder/Decoder (CODEC) 109, an image memory 110, a printer 111, a FAX communication unit 112, and a local area network interface (LAN-I/F) 113. The units 101 to 113 are connected to one another through a bus 114 for communication among them.

CPU 101 controls an operation of each unit in the internet facsimile apparatus 1 according to a control program stored in ROM 102. The control program with which CPU 101 controls an operation of each unit in the internet facsimile apparatus 1 is stored in ROM 102. Various kinds of data such as setting information used for the operation of the internet facsimile apparatus 1 are stored in RAM 103 in readable and writable manners, and RAM 103 also functions as a work area of CPU 101. Image data transmitted and received by the facsimile function is accumulated in HDD 104.

Although not illustrated, the operation unit 105 includes a start key for providing an instruction to start a document scanning operation, ten keys for inputting a facsimile number and the number of copies, character input keys for inputting characters, and cursor keys for specifying a operation target. The display unit 106 includes a touch-panel liquid crystal display (LCD) (operation panel) which displays various setting states and an operation state of the apparatus 1 with characters or graphics and a light emitting diode LED) lamp which expresses a state of the apparatus 1 by lighting or by going dark. The display of the LCD is changed according to the operation of each key included in the operation unit 105 or the touch on the panel of LCD included in the display unit 106, and various kinds of input can be performed by the operation of each key on the operation unit 105 corresponding to the display of LCD or the touch on the panel of LCD.

The document scanning unit 107 scans a document image to generate image data of an RGB colorimetric system. Although not illustrated, the document scanning unit 107 includes a flat bed scanner (FBS) which scans a document placed on a transparent document placing plate and an automatic document feeder (ADF) which feeds the document in order to scan the documents placed on a document tray.

The image processing unit 108 performs pieces of processing such as color adjustment and color reduction processing to the image data outputted from the document scanning unit 107. The detailed color reduction processing is described later. The CODEC 109 encodes the image data processed by the image processing unit 108 or the like and decodes the encoded image data. The image data inputted to the CODEC 109 is encoded based on JPEG, MH, MR, MMR, or JBIG method and the like, and the encoded image data is stored in the image memory 110.

The printer 111 prints the image data of a CMYK colorimetric system, which is read from the image memory 110 and decoded by the CODEC 109.

The FAX communication unit 112 conducts facsimile (FAX) communication of the document image data. Although not illustrated, the FAX communication unit 112 includes a modulator/demodulator (MODEM) and a network control unit (NCU). MODEM modulates and demodulates transmission data and reception data pursuant to recommendation V.34 standard of ITU-T (International Telecommunication Union Telecommunication Standardization Sector) or similar standards. NCU is a line network control apparatus which controls a telephone line to place or disconnect a call, and NCU is connected to PSTN. In addition to the internet facsimile apparatus 1, a G3 facsimile apparatus and the like can be connected to PSTN. The internet facsimile apparatus 1 can transmit and receive the image data to and from the G3 facsimile apparatus through facsimile communication.

The LAN-I/F 113 enables the internet facsimile apparatus 1 to be connected to LAN. A client PC and the like are connected to LAN, and the internet facsimile apparatus 1 can conduct data communication with the client PC. The internet facsimile apparatus 1 is connected to another internet facsimile apparatus provided on the Internet through LAN and a router, and the internet facsimile apparatus 1 can conduct internet facsimile communication with another internet facsimile apparatus and the like. As used herein, the internet facsimile communication shall mean communication in which an electronic mail to which TIFF (Tagged Image File Format)-S format file (image data) is attached is transmitted and received by SMTP (Simple Mail Transfer Protocol) .

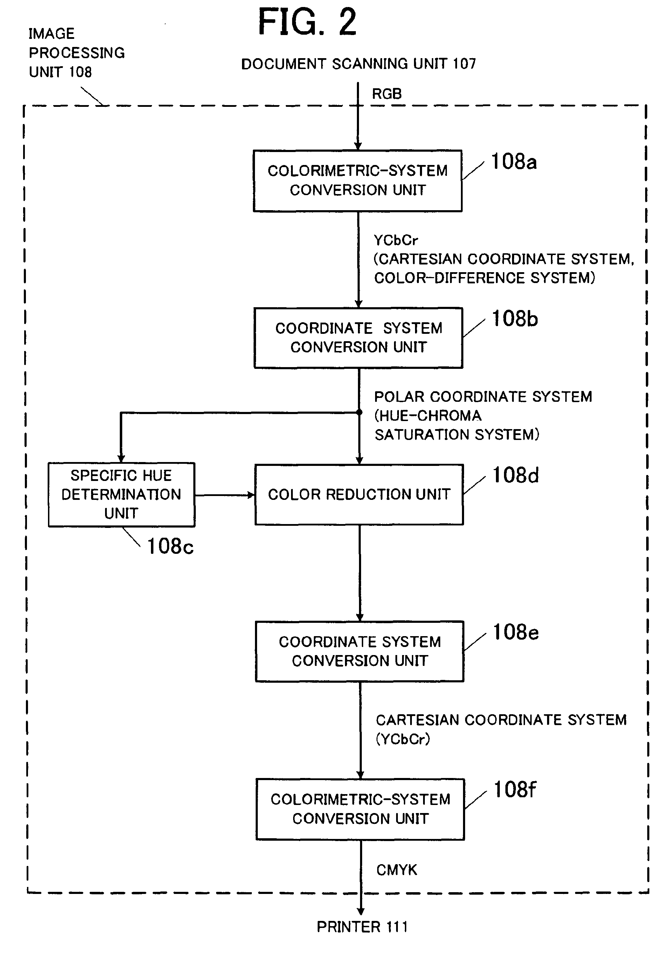

In the internet facsimile apparatus 1, the document image scanned with the document scanning unit 107 can be color-reduced and printed with the printer 111. In performing the color reduction, a specific hue and a hue which becomes a complementary color of the specific hue are determined based on the document image data generated by the document scanning unit 107, and the determined specific hue and the complementary-color hue are stored to perform color reduction. The color reduction processing is performed by each dedicated circuit constituting the units 108a to 108f included in the image processing unit 108 of Fig. 2.

(First Embodiment)

The color reduction processing according to a first embodiment in the image processing unit 108 will be described with reference to Fig. 2. The image data of the RGB colorimetric system, generated by the document scanning unit 107, is inputted to the image processing unit 108 and given to a colorimetric-system conversion unit 108a. The colorimetric-system conversion unit 108a converts the image data of the RGB colorimetric system into the image data of a YCbCr colorimetric system. As is well known, the conversion of the RGB colorimetric system into the YCbCr colorimetric system is performed by computation using an equation (1) to an equation (3).

$$Y = 0.299R + 0.587G + 0.114B \qquad (1)$$

$$Cb = - 0.169R - 0.331G + 0.500B \qquad (2)$$

$$Cr = 0.500R - 0.419G - 0.081B \qquad (3)$$

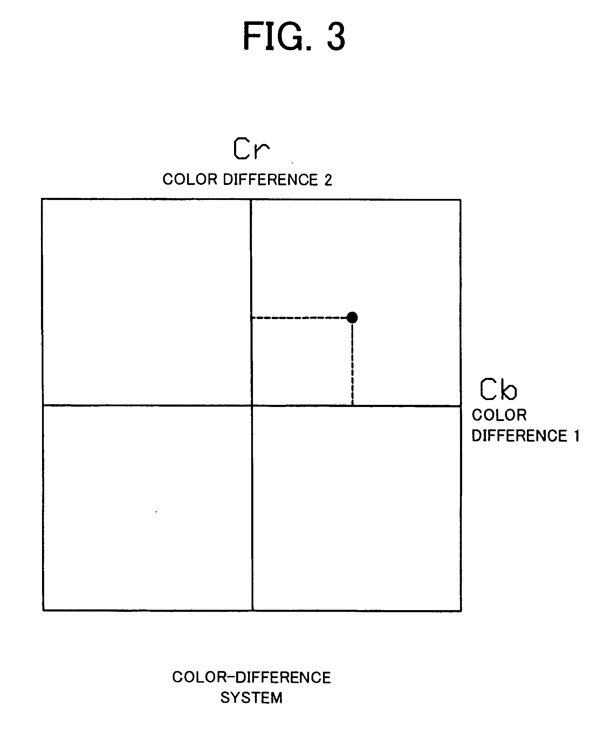

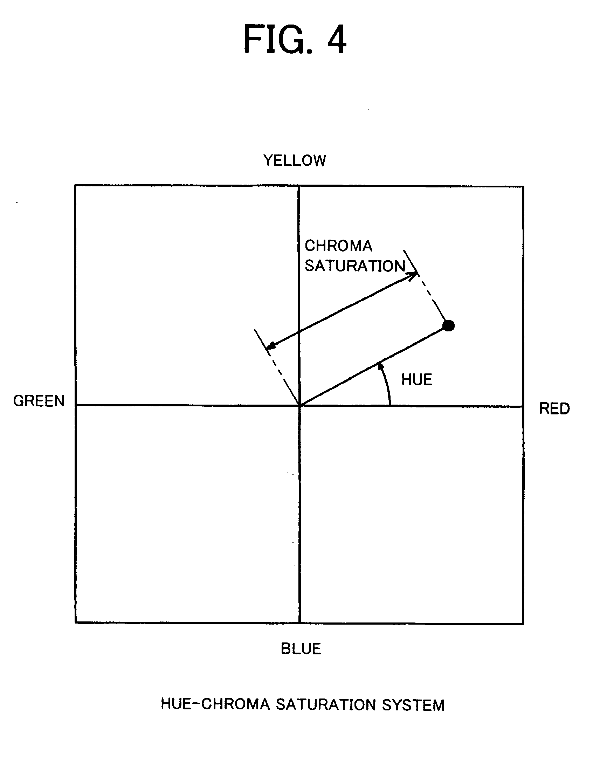

The YCbCr colorimetric system is a color-difference system and also a Cartesian coordinate system in which an axis perpendicular to a paper plane indicates brightness (Y), a horizontal axis indicates color difference 1 (Cb), and a vertical axis indicates color difference 2 (Cr) as illustrated in Fig. 3. Accordingly, the image data of the YCbCr colorimetric system does not include a hue parameter. Therefore, in order to determine the retained hue, the output of the colorimetric-system conversion unit 108a is given to a coordinate-system conversion unit 108b to convert the Cartesian coordinate system into a polar coordinate system (polar coordinate conversion), and the image data of the YCbCr colorimetric system is converted into image data including the hue parameter. As illustrated in Fig. 4, the coordinate-system conversion unit 108b performs conversion processing to convert the image data of the color-difference system into image data of a hue-chroma saturation system. An axis perpendicular to the paper plane of Fig. 4 indicates lightness. The coordinate system conversion of the Cartesian coordinate system into the polar coordinate system can be performed by well-known computation processing.

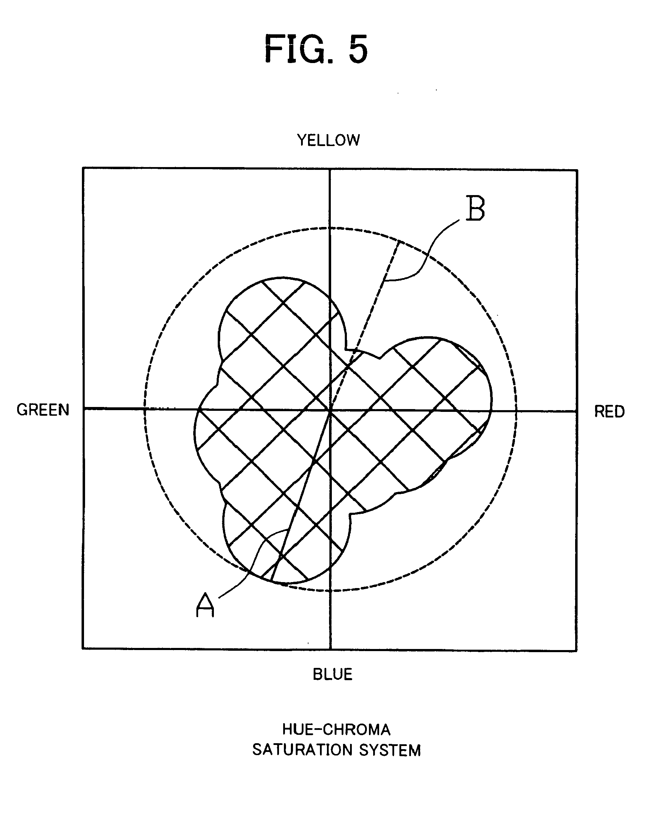

The image data converted into the image data of hue-chroma saturation system by the coordinate-system conversion unit 108b is given to a specific color determination unit 108c. The specific color determination unit 108c determines the retained hue, i.e., the hue remaining the color in the printed image based on the inputted image data of the hue-chroma saturation system. Specifically, as illustrated in Fig. 5, pixels of the inputted image data are mapped in a coordinate space of the hue-chroma saturation system, and the hue having the highest chroma saturation is determined as the retained specific hue based on the mapping result. In Fig. 5, a shaded portion indicates the pixels of the mapped image data. A range illustrated by a broken-line circle indicates the highest chroma saturation, and the hue illustrated by a solid line A has the highest chroma saturation. When the retained specific hue (illustrated by the solid line A) is determined, the hue of the complementary color corresponding to the hue illustrated by the solid line A is determined. In Fig. 5, the hue illustrated by a broken line B corresponds to the complementary color of the hue illustrated by the solid line A. Hereinafter the hue illustrated by the solid line A is referred to as "specific hue" and the hue illustrated by the broken line B is referred to as "complementary color hue". The specific hue A and complementary color hue B determined by the specific color determination unit 108c are given to a color reduction unit 108d.

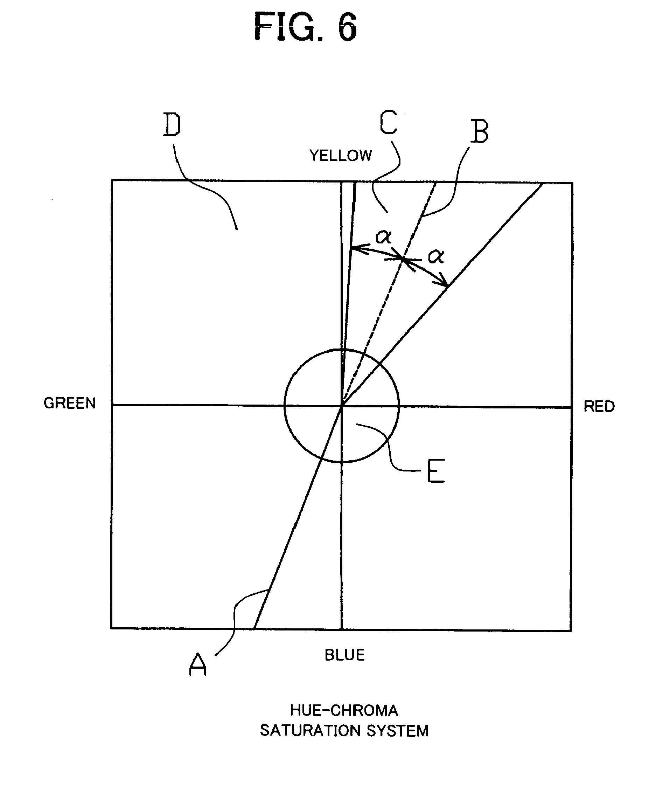

The color reduction unit 108d performs the color reduction on the image data given from the coordinate-system conversion unit 108b based on the specific hue A and complementary color hue B given from the specific color determination unit 108c. Specifically, as illustrated in Fig. 6, all the pixels of the hues in a range (range C) of angles $\alpha$ on both sides from the complementary color hue B are replaced by the complementary color hue B, and all the pixels of the hues in a range (range D) except for the range C are replaced by the specific hue A. For the pixels in a range (range E) whose chroma saturation illustrated by the solid-line circle is not more than a predetermined value, the chroma saturation is set to be zero to form a monochrome color.

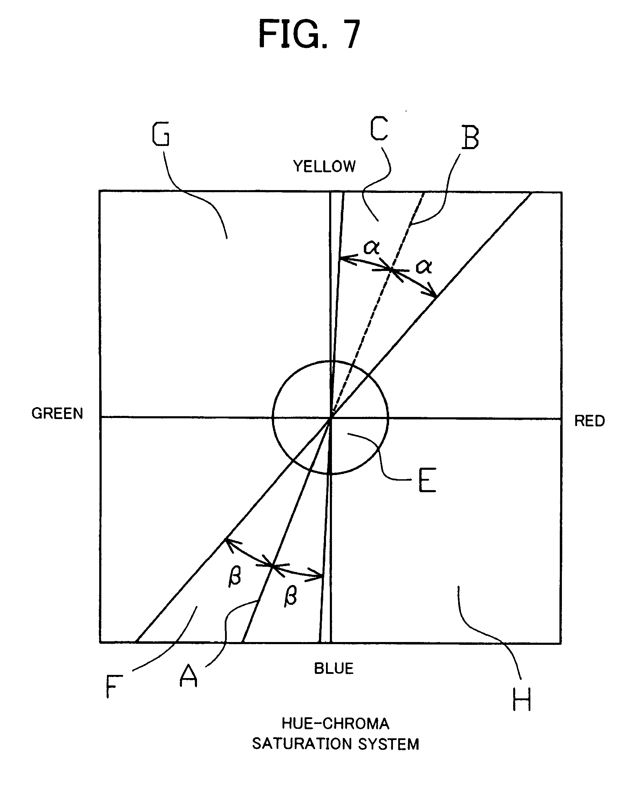

In addition to the method illustrated in Fig. 6, a method illustrated in Fig. 7 can also be adopted as the color reduction method performed by the color reduction unit 108d. Similarly to the method illustrated in Fig. 6, all the pixels of the hues in the range (range C) of the angles α on both sides from the complementary color hue B are replaced by the complementary color hue B. Then, all the pixels of the hues in a range (range F) of angles β on both sides from the specific hue A are replaced by the specific hue A. Additionally, for the pixels in ranges except for the range F where the pixels are replaced by the specific hue A and the range C where the pixels are replaced by the complementary color hue B, i.e., for the pixels in ranges G and H, the chroma saturation is set to be zero to form a monochrome color. Similarly to the method illustrated in Fig. 6, the chroma saturation is set to be zero for the range E illustrated by the solid-line circle.

The color-reduction image data obtained in this manner is given to a coordinate-system conversion unit 108e. The coordinate-system conversion unit 108e converts the polar coordinate system into the Cartesian coordinate system (polar-system reverse conversion) in order to return the image data to the YCbCr colorimetric system. The coordinate system conversion of the polar coordinate system into the Cartesian coordinate system can be realized by well-known computation processing.

The image data which is color-reduced and converted into the YCbCr colorimetric system is given to a colorimetric-system conversion unit 108f. The colorimetric-system conversion unit 108f converts the image data of the YCbCr colorimetric system into the image data of the CMYK colorimetric system in order that the printer 111 prints the image data on a recording medium. The colorimetric-system conversion processing can be realized by well-known computation processing. The converted image data of the CMYK colorimetric system is delivered to the printer 111 and printed on the recording medium such as copy paper and an OHP sheet.

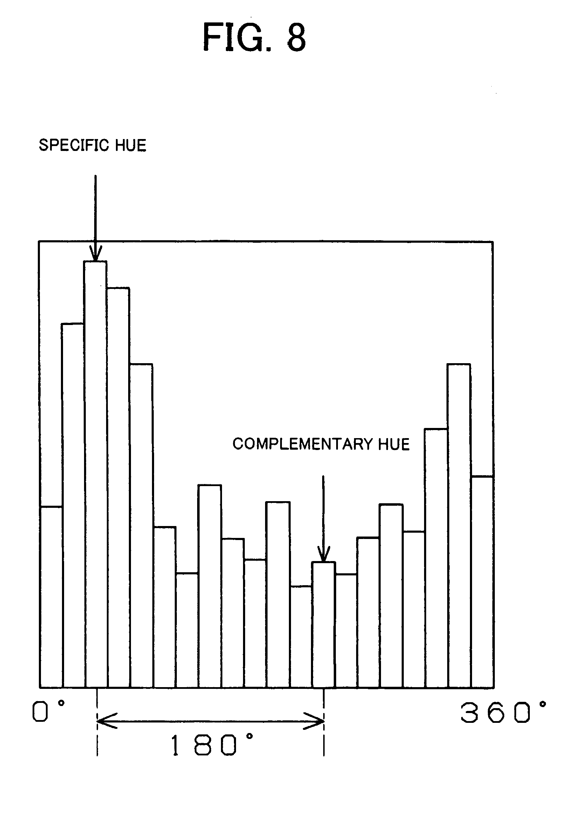

(Second Embodiment)
Color reduction processing according to a second embodiment differs from the color reduction processing of the first embodiment in the specific hue determination method performed by the specific hue determination unit 108c of the image processing unit 108. While the hue having the highest chroma saturation is set to be the retained specific hue in the first embodiment, the hue having the highest appearance frequency is set to be the specific hue in the second embodiment. That is, as illustrated in Fig. 8, the specific hue determination unit 108c produces a histogram indicating the appearance frequency in each hue (frequency) while setting, for example, the red hue to 0° based on the given image data. In the histogram, the hue having the highest appearance frequency is set to be the specific hue. In this case, the hue separated by 180° from the specific hue becomes the hue becoming the complementary color.

(Third Embodiment)
Color reduction processing according to a third embodiment differs from the color reduction processing of the first and second embodiments in the retained specific hue determination method performed by the specific hue determination unit 108c. That is, in the color reduction processing of the third embodiment, the user performs input operation to the operation unit 105 to determine the specific hue. For example, in a copy mode, when operation for making color-reduction copy in which the retained color is specified is performed to the operation unit 105, a screen for specifying the retained hue (specific hue) is displayed on LCD of the display unit 106. Selection items of the hues such as red, yellow, green, blue, cyan, magenta, and yellow are displayed on the display screen, and the user touches the selection item with the finger to select the specific hue. In this case, when the specified color (specific hue) is set to one of the cyan (C), magenta (M), and yellow (Y), because the printer 111 has the cyan (C), magenta (M), yellow (Y), and black (K) toners, the toner necessary to print the specific hue becomes a single color toner to save the toner used.

As described above, according to the internet facsimile apparatus 1 of the present invention, in the processing for reducing the color of the document image, the color reduction is performed by leaving the specific hue determined based on the chroma saturation or appearance frequency and the hue which becomes the complementary color of the specific hue. Accordingly, because the color-reduction image includes the complementary color, the high hue contrast can be realized irrespective of the color reduction.

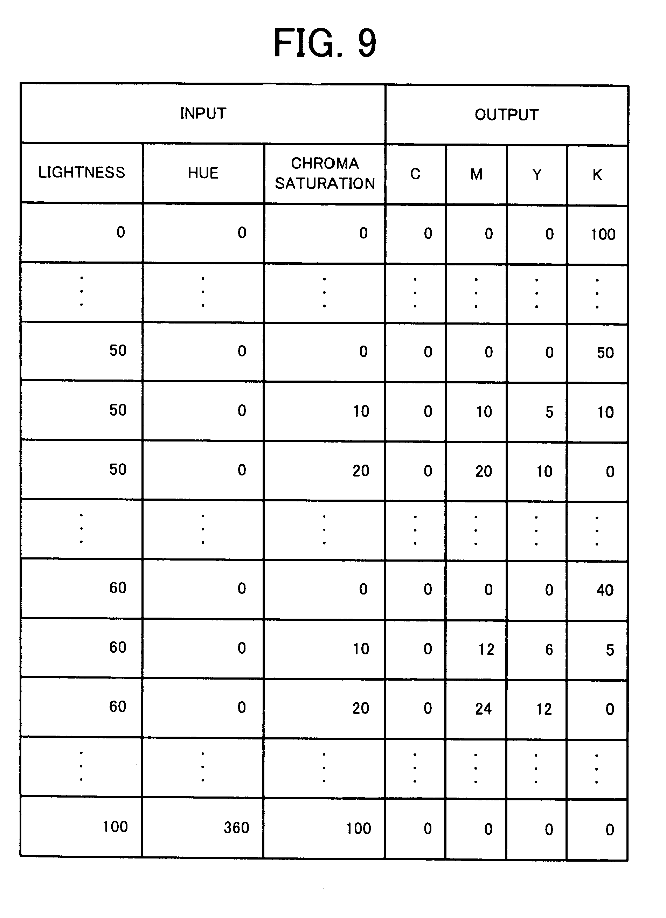

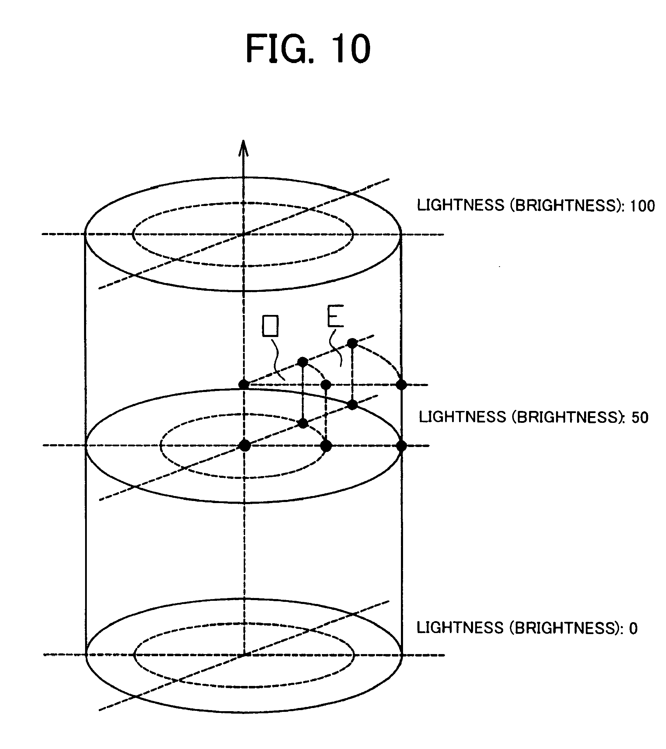

The present invention is not limited to the above-described embodiments, but various changes and modifications can be made without departing from the scope of the invention. In the above-described embodiments, the functions of the color reduction unit 108d, coordinate-system conversion unit 108e, and colorimetric-system conversion unit 108f of the image processing unit 108 are separately processed by individual circuits. Alternatively, as illustrated in Fig. 9, the functions may collectively be processed using a three-dimensional lookup table. In this case, not lattice points obtained by dividing the coordinate space with a cube, but lattice points obtained by dividing the coordinate space with a sectorial rod O and an arc trapezoidal rod E as illustrated in Fig. 10 may be used as the divided lattice points which become the input coordinate of the three-dimensional lookup table. Because the image data of the hue-chroma saturation system which is of the input data is the polar coordinate system, the use of the lattice points obtained by dividing the coordinate space with the sectorial rod O and the arc trapezoidal rod E facilitates interpolation computation of a point (pixel) located away from the lattice point.

The coordinate-system conversion unit 108b, the specific hue determination unit 108c, the color reduction unit 108d, and the coordinate-system conversion unit 108e may be realized by a collective table conversion.

In the first embodiment, the specific hue and the complementary color hue may be retained before color reduction of image data when the chroma saturation of the complementary color hue is not lower than a predetermined threshold value, and the specific hue may be retained before color reduction of image data while the complementary color hue is not retained when the chroma saturation of the complementary color hue is lower than the predetermined threshold value.

In the first embodiment, the specific hue and the complementary color hue may be retained before color reduction when a proportion of the chroma saturation of the complementary color hue to the chroma saturation of the specific hue is not lower than a predetermined threshold value, and the specific hue may be retained before color reduction while the complementary color hue is not retained when the proportion of the chroma saturation of the complementary color hue to the chroma saturation of the specific hue is lower than the predetermined threshold value.

In the second embodiment, the specific hue and the complementary color hue may be retained before color reduction of the image data when the appearance frequency of the complementary color hue in the image data is not lower than a predetermined threshold value, and the specific hue may be retained before color reduction of the image data while the complementary color hue is not retained when the appearance frequency of the complementary color hue in the image data is lower than the predetermined threshold value.

In the second embodiment, the specific hue and the complementary color hue may be retained before color reduction of the image data when a proportion of the appearance frequency of the complementary color hue in the image data to the appearance frequency of the specific hue in the same image data is not lower than a predetermined value, and the specific hue may be retained before color reduction of the image data while the complementary color hue is not retained when the proportion of the chroma saturation of the complementary color hue in the image data to the appearance frequency of the specific hue in the same image data is lower than the predetermined value.

In the above-described embodiments, the printer 111 prints the color-reduction image data on the recording paper. Alternatively, the color-reduction image data may be encoded in the JPEG method to form a TIFF file including the JPEG image data, followed by outputting the file to a folder of the client PC connected to the internet facsimile apparatus 1 through LAN.

For example, the present invention can be applied to the image processing apparatus having the function of outputting the document image while reducing the color of the document image.

While the present invention has been described with respect to preferred embodiments thereof, it will be apparent to those skilled in the art that the disclosed invention may be modified in numerous ways and may assume many embodiments other than those specifically set out and described above. Accordingly, it is intended by the appended claims to cover all modifications of the present invention that fall within the true spirit and scope of the present invention.

**Claims**

1. An image processing apparatus having a function of outputting a document image while reducing a color of the document image, the image processing apparatus comprising:

   an image generation unit arranged to scan a document to generate image data;
   a hue determination unit 108c arranged to determine a specific hue included in the image data and a hue becoming a complementary color of the specific hue;
   a color reduction unit 108d arranged to retain the specific hue and the hue becoming the complementary color to reduce a color of the image data; and
   an output unit arranged to output the image data whose color is reduced by the color reduction unit.

2. The image processing apparatus according to claim 1, wherein the color reduction unit 108d replaces the image data which is of a hue in a predetermined range from the hue becoming the complementary color with the hue becoming the complementary color, and
   the color reduction unit 108d replaces the image data which is of a hue except for the hue in the predetermined range with the specific hue.

3. The image processing apparatus according to claim 1, wherein the color reduction unit 108d replaces the image data which is of a hue in a predetermined first range from the specific hue with the specific hue,
   the color reduction unit 108d replaces the image data which is of a hue in a predetermined second range from the hue becoming the complementary color with the hue becoming the complementary color, and
   chroma saturation of image data which is of a hue except for hues in the predetermined first range and the predetermined second range is set to be zero.

**4.** The image processing apparatus according to claim 1, wherein the hue determination unit 108c sets a hue having the highest chroma saturation in hues included in the image data to be the specific hue.

**5.** The image processing apparatus according to claim 4, wherein the color reduction unit 108d retains before color reduction of the image data the specific hue and the hue becoming the complementary color when chroma saturation of the hue becoming the complementary color is not lower than a predetermined threshold value, and the color reduction 108d unit retains before color reduction of the image data the specific hue when the chroma saturation of the hue becoming the complementary color is lower than the predetermined threshold value.

**6.** The image processing apparatus according to claim 4, wherein the color reduction unit 108d retains before color reduction of the image data the specific hue and the hue becoming the complementary color when a proportion of chroma saturation of the hue becoming the complementary color to chroma saturation of the specific hue is not lower than a predetermined value, and the color reduction unit 108d retains before color reduction of the image data the specific hue when the proportion is not lower than the predetermined value.

**7.** The image processing apparatus according to claim 1, wherein the hue determination unit 108c sets a hue having the highest appearance frequency in hues included in the image data to be the specific hue.

**8.** The image processing apparatus according to claim 7, wherein the color reduction unit 108d retains before color reduction of the image data the specific hue and the hue becoming the complementary color when appearance frequency of the hue becoming the complementary color is not lower than a predetermined threshold value, and the color reduction unit 108d retains before color reduction of the image data the specific hue when the appearance frequency of the hue becoming the complementary color is lower than the predetermined threshold value.

**9.** The image processing apparatus according to claim 4, wherein the color reduction unit 108d retains before color reduction of the image data the specific hue and the hue becoming the complementary color when a proportion of appearance frequency of the hue becoming the complementary color to appearance frequency of the specific hue is not lower than a predetermined value, and the color reduction unit 108d retains before color reduction of the image data the specific hue when the proportion is lower than the predetermined value.

**10.** The image processing apparatus according to claim 1, further comprising an input accepting unit arranged to accept input operation from the outside,
wherein the hue determination unit 108c determines the specific hue based on the input operation accepted by the input accepting unit, and the hue determination unit 108c determines the hue becoming the complementary color based on the determined specific hue.

**11.** An image processing method comprising the steps of:

scanning a document to generate image data;
determining a specific hue included in the image data and a hue becoming a complementary color of the specific hue;
retaining the specific hue and the hue becoming the complementary color to reduce a color of the image data; and
outputting the color-reduced image data.

# FIG. 1

1

CPU — 101

102
ROM

108
IMAGE PROCESSING UNIT

103
RAM

109
CODEC

104
HDD

110
IMAGE MEMORY

105
OPERATION UNIT

111
PRINTER

106
DISPLAY UNIT

112
FAX COMMUNICATION UNIT

107
DOCUMENT SCANNING UNIT

113
LAN-I/F

114

# FIG. 2

DOCUMENT SCANNING UNIT 107

IMAGE
PROCESSING
UNIT 108

RGB

COLORIMETRIC-SYSTEM
CONVERSION UNIT — 108a

YCbCr
(CARTESIAN COORDINATE SYSTEM,
COLOR-DIFFERENCE SYSTEM)

COORDINATE SYSTEM
CONVERSION UNIT — 108b

POLAR COORDINATE SYSTEM
(HUE-CHROMA
SATURATION SYSTEM)

SPECIFIC HUE
DETERMINATION
UNIT

108c

COLOR REDUCTION UNIT — 108d

COORDINATE SYSTEM
CONVERSION UNIT — 108e

CARTESIAN COORDINATE SYSTEM
(YCbCr)

COLORIMETRIC-SYSTEM
CONVERSION UNIT — 108f

CMYK

PRINTER 111

# FIG. 3

Cr
COLOR DIFFERENCE 2

Cb
COLOR
DIFFERENCE 1

COLOR-DIFFERENCE
SYSTEM

# FIG. 4

HUE-CHROMA SATURATION SYSTEM

# FIG. 5

YELLOW

GREEN

RED

BLUE

HUE-CHROMA
SATURATION SYSTEM

# FIG. 6

HUE-CHROMA
SATURATION SYSTEM

# FIG. 7

HUE-CHROMA
SATURATION SYSTEM

# FIG. 8

SPECIFIC HUE

COMPLEMENTARY HUE

0°      360°

180°

# FIG. 9

| INPUT | | | OUTPUT | | | |
|---|---|---|---|---|---|---|
| LIGHTNESS | HUE | CHROMA SATURATION | C | M | Y | K |
| 0 | 0 | 0 | 0 | 0 | 0 | 100 |
| ⋮ | ⋮ | ⋮ | ⋮ | ⋮ | ⋮ | ⋮ |
| 50 | 0 | 0 | 0 | 0 | 0 | 50 |
| 50 | 0 | 10 | 0 | 10 | 5 | 10 |
| 50 | 0 | 20 | 0 | 20 | 10 | 0 |
| ⋮ | ⋮ | ⋮ | ⋮ | ⋮ | ⋮ | ⋮ |
| 60 | 0 | 0 | 0 | 0 | 0 | 40 |
| 60 | 0 | 10 | 0 | 12 | 6 | 5 |
| 60 | 0 | 20 | 0 | 24 | 12 | 0 |
| ⋮ | ⋮ | ⋮ | ⋮ | ⋮ | ⋮ | ⋮ |
| 100 | 360 | 100 | 0 | 0 | 0 | 0 |

# FIG. 10

LIGHTNESS (BRIGHTNESS): 100

LIGHTNESS (BRIGHTNESS): 50

LIGHTNESS (BRIGHTNESS): 0

European Patent
Office

**EUROPEAN SEARCH REPORT**

Application Number

EP 08 00 3406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/079668 A (POLAROID CORP [US]) 25 September 2003 (2003-09-25) * page 4, line 1 - line 16 * * page 10, line 5 - line 12 * * page 15, line 11 - page 16, line 28; figure 8 * * page 19, line 13 - line 25 * | 1,4-6,8, 9,11 | INV. H04N1/56 |
| Y | * page 14, line 15 - line 18 * | 2,3,10 | |
| Y | * page 9, line 8 - line 24 * | 7 | |
| D,Y | EP 1 318 478 A (RICOH KK [JP]) 11 June 2003 (2003-06-11) * paragraphs [0003], [0009], [0018] * * paragraphs [0038], [0039] * | 2,3,10 | |
| Y | US 6 025 862 A (THOMPSON JOHN R [US]) 15 February 2000 (2000-02-15) * abstract; claims 1,6,7 * | 7 | |

| | |
|---|---|
| | TECHNICAL FIELDS SEARCHED (IPC) |
| | H04N |

The present search report has been drawn up for all claims

| Place of search | Date of completion of the search | Examiner |
|---|---|---|
| Munich | 18 June 2008 | Bakstein, Hynek |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 08 00 3406

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2008

| Patent document cited in search report | | Publication date | Patent family member(s) | | Publication date |
|---|---|---|---|---|---|
| WO 03079668 | A | 25-09-2003 | CA | 2478690 A1 | 25-09-2003 |
| | | | EP | 1483897 A1 | 08-12-2004 |
| | | | JP | 2005520439 T | 07-07-2005 |
| | | | US | 2003176281 A1 | 18-09-2003 |
| EP 1318478 | A | 11-06-2003 | JP | 3825740 B2 | 27-09-2006 |
| | | | JP | 2004007370 A | 08-01-2004 |
| | | | US | 2003128379 A1 | 10-07-2003 |
| US 6025862 | A | 15-02-2000 | DE | 19547200 A1 | 04-07-1996 |
| | | | GB | 2296838 A | 10-07-1996 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007074775 A

- JP 2004007370 A